# EUROPÄISCHE PATENTSCHRIFT

(11) **EP 2 576 720 B1**
(45) Veröffentlichungstag und Bekanntmachung des Hinweises auf die Patenterteilung: **20.07.2016**
(21) Anmeldenummer: 11721296.9
(22) Anmeldetag: 20.05.2011
(51) Int. Cl.: C09K 5/06, F24J 2/46, F28D 20/00

(54) **ZEMENTBASIERTER CHEMISCHER ENERGIESPEICHER**
CEMENT-BASED CHEMICAL ENERGY STORES
ACCUMULATEUR D'ÉNERGIE CHIMIQUE À BASE DE CIMENT

(30) Priorität: 27.05.2010 CH 8402010
(43) Veröffentlichungstag der Anmeldung: 10.04.2013
(73) Patentinhaber: EMPA, 8600 Dübendorf (CH)
(72) Erfinder: KAUFMANN, Josef, CH-8152 Opfikon (CH); WINNEFELD, Frank, CH-8400 Winterthur (CH)
(74) Vertreter: Schneider Feldmann AG Patent- und Markenanwälte
(86) Internationale Anmeldenummer: PCT/EP2011/058243
(87) Internationale Veröffentlichungsnummer: WO 2011/147748

(56) Entgegenhaltungen:
- DE-A1- 2 547 765
- JP-A- 58 095 195
- L STRUBLE ET AL: "Heats of dehydration and specific heats of compounds found in concrete and their potential for thermal energy storage", SOLAR ENERGY MATERIALS, Bd. 14, Nr. 1, 1. August 1986 (1986-08-01) , Seiten 1-12, XP55006293, ISSN: 0165-1633, DOI: 10.1016/0165-1633(86)90008-0

## Beschreibung

### Technisches Gebiet

Die vorliegende Erfindung beschreibt einen lasttragenden und strukturstabilen Energiespeicher, umfassend ein Bauteil aus einem erhärteten Stoffgemisch, wobei ein Energiebeladungs-/Energieentladungssystem das erhärtete Stoffgemisch mindestens teilweise quert, die Verwendung eines Stoffgemisches zur Herstellung eines Energiespeichers in Form von lasttragenden und strukturstabilen Bauteilen, sowie ein Verfahren zur Herstellung eines lasttragenden und strukturstabilen Energiespeichers, umfassend ein Bauteil aus einem erhärteten Stoffgemisch, wobei ein Energiebeladungs-/Energieentladungssystem und ein Entfeuchtungs-/Befeuchtungssystem das erhärtete Stoffgemisch mindestens teilweise quert.

### Stand der Technik

Zur Speicherung von Wärmeenergie können sensible Wärmespeicher oder Latentwärmespeicher verwendet werden. Während beim Latentwärmespeicher ein Phasenübergang des verwendeten Materials oder von Stoffgemischanteilen stattfindet, ändert sich die Phase des Materials beim sensiblen Wärmespeicher nicht. Die Speicherung von Wärmeenergie wird immer wichtiger, da beispielsweise die in Solarthermiekraftwerken gewonnene Wärmeenergie über gewisse Zeiträume gespeichert werden muss, um die Wärmeenergie zu gewünschten Zeitpunkten wieder freisetzen zu können.

Aufgrund eines Phasenüberganges, beispielsweise zwischen flüssig und fest, ist die Verwendung des Materials des Latentwärmespeichers beispielsweise als lasttragendes und/oder strukturstabiles Bauteil problematisch, da die mechanische Stabilität stark variiert. Latentwärmespeicher liegen darum vielfach in Form von abgeschlossenen mit entsprechenden Stoffgemischen gefüllten Gefässen vor.

Wie in der WO2009059908 beschrieben, kann aber ein Material welches als Latentwärmespeicher fungiert Teil eines Stoffgemisches sein, welches auch zur Herstellung lasttragender Bauteile einsetzbar ist. Verschiedene Bauteile mit Latentwärmespeichereigenschaften werden aus Stoffgemischen, welche mindestens teilweise Latentwärmespeichereigenschaften aufweisen, hergestellt.

Die verschiedenen Komponenten des Stoffgemisches mit unterschiedlichen Eigenschaften müssen ausreichend homogen vermischt sein, sodass unter anderem eine optimale Wärmeübertragung auf das Latentwärmespeichermaterial gewährleistet ist. Obwohl Latentwärmespeicher im Allgemeinen mehr Energie pro Volumeneinheit speichern als andere Wärmespeichermaterialien, sind Latentwärmespeichermaterialien aufgrund des Phasenüberganges nur bis zu einer bestimmten Konzentration verwendbar, wenn die mechanische Stabilität beachtet werden muss. Nachteilig an den vorgestellten Stoffgemischen mit Latentwärmespeicheranteil ist aber hauptsächlich, dass die notwendigen Materialien aus schwer zu beschaffenden Verbindungen bestehen, oder beispielsweise veredelt in Form von Kapseln vorliegen müssen.

Bei der Herstellung von grossen Mengen eines Latentwärmespeichers ist natürlich auch der Anschaffungspreis relevant, welcher die Stoffgemische für Latentwärmespeicher entsprechend verteuert. Wenn Anteile des Latentwärmespeichers weitere Veredelungsschritte, beispielsweise eine Flammschutzveredelung zur Feuerhemmung, benötigen, verteuert sich das Material nochmals.

In der WO2009144233 ist eine Vorrichtung zum Speichern von thermischer Energie beschrieben, wobei ein sensibler Wärmespeicher beschrieben wird, der die hohe Wärmekapazität eines monolithischen Betonblockes ausnutzt. Ein in den Wärmespeicher integriertes Rohrleitungssystem führt ein Übertragungsmedium, durch welches thermische Energie beispielsweise aus einer Solarthermieanlage in den Betonblock eingeleitet wird. Der Betonblock ist mit einer Isolationshülle vollständig umgeben, damit die Wärmeverluste gering gehalten werden. Der gesamte Betonblock wird durch die Einleitung von thermischer Energie aufgeheizt, wobei die Temperatur entsprechend gehalten werden muss. Zur Entnahme von thermischer Energie muss nur ein Kontakt mit dem Rohrleitungssystem und dem darin zirkulierenden Übertragungsmedium hergestellt werden und die gewünschte Energie entsprechend entnommen werden.

Nachteilig an dem Wärmespeicher der WO2009144233 ist, dass der Betonblock nach dem Beladevorgang dauerhaft auf eine erhöhte Temperatur aufgeheizt vorliegt und entsprechend dauerhaft bis zum zeitversetzten Entnahmevorgang vor thermischen Verlusten geschützt sein muss. Dies setzt besondere Anforderungen an eine Isolationshülle, sowie das Rohrleitungssystem.

In L. Strube et al "Heats of dehydration and specific heats of compounds found in concrete and their potential for thermal energy storage", SOLAR ENERGY MATERIALS, Bd. 14, Nr. 1, werden verschiedene Ettringite und Monosulfate untersucht in Bezug auf die Reversibilität der Dehydratation. Es wurden reine Phasen dieser Stoffe benutzt und in einem Versuchsaufbau in Pulverform befeuchtet und entfeuchtet, womit die prinzipielle Tauglichkeit für den Einsatz von Ettringit als Energiespeicher gezeigt wird. Es wird in L. Strube et al gemutmasst, dass Ettringit als fertiger Zusatzstoff einem Mauerwerk oder Gussbeton zusätzlich zugesetzt werden kann und ein lasttragender strukturstabiler Energiespeicher erstellbar sein sollte. Es wird aber kein Mischungsverhältnis Ettringit/Zement/Additive und kein anzustrebender Gewichtsanteil von Ettringit in einem Stoffgemisch zur Erreichung eines Energiespeichers offenbart. Die Möglichkeit der Bildung von Ettringit in grossen Mengen bei der Erhärtung eines Stoffgemischs wird nicht in Betracht gezogen.

Dass ternärer Zement als Komponente zur Herstellung eines Bauteils, beispielsweise einer Leichtbauplatte genutzt werden kann, wurde bereits in der DE2547765 offenbart. Die herstellbaren Bauteile sind lasttragend und strukturstabil. Es wird aber nicht erwähnt, ob und wie daraus Bauteile herstellbar sind, die eine Speicherung oder Entnahme bzw. Beladung/Entladung von Energie zulassen und welchen Ettringitanteil das erhärtete Stoffgemisch dazu haben sollte. Da in DE2547765 explizit erwähnt wird, dass eine Temperatur von 65°C nicht überschritten wird, eignet sich der dort offenbarte ettringithaltige Beton aber nicht zur Beladung/Entladung mit Energie, sodass DE2547765 von der Schaffung eines Energiespeichers wegführt.

Nach Kenntnis von L. Strube et al und ausser Acht lassen von DE2547765, hätte der Fachmann versucht einen maximalen Anteil Ettringit zu erreichen, um einen optimierten Energiespeicher zu erreichen, was aus JP58095195 bekannt ist. Der in JP58095195 beschriebene Energiespeicher ist aber nicht lasttragend und nicht strukturstabil, da Ettringit nur in losen Partikeln vorliegt. Man erkennt in JP58095195 nicht, ob und wie ein lasttragendes Bauteil aus Ettringit hergestellt werden kann bzw. welcher Ettringitgehalt angestrebt werden sollte. Gemäss Lehre der JP58095195 wird kein lasttragendes massives Bauteil angestrebt, da die Entfeuchtung durch Sonnenlichteinstrahlung und Wärme erfolgt, weshalb lose Ettringitpartikel erfolgsversprechender sind. Infolge der Verwendung lose geschütteter Partikel kann Ettringit nicht dicht gepackt werden und es entsteht ein grosser Hohlraumgehalt, was zu einer geringeren Volumenspeicherdichte führt. Da nur vergleichsweise geringe Mengen Ettringit auf dem Weltmarkt erhältlich sind und vor dem Hintergrund, dass nicht sicher ist, ob eine blosse Hinzufügung von viel Ettringit zu einem lasttragenden Bauteil führen wird, hätte der Fachmann aus Kostengründen auf Versuche verzichtet.

Ein Vorteil der vorliegenden Erfindung ist darin zu sehen, dass auf eine Zugabe von reinem Ettringit zu einem Stoffgemisch verzichtet werden kann und trotzdem aus dem erhärteten Stoffgemisch lasttragende strukturstabile Energiespeicher mit einem gewünschten Anteil Ettringit hergestellt werden können.

### Darstellung der Erfindung

Die vorliegende Erfindung hat sich zur Aufgabe gestellt einen chemischen Energiespeicher durch Verwendung eines speziellen erhärteten Stoffgemisches zu schaffen, welches neben energiespeichernden Eigenschaften zusätzlich auch in Form von beliebig geformten lasttragenden und/oder strukturstabilen Bauteilen verwendbar ist. Eine weitere Aufgabe ist die Bereitstellung eines Stoffgemisches als Langzeit-Energiespeicher, welches im energiebeladenen Zustand nicht dauerhaft gegen Wärmeverluste geschützt werden muss.

In einem reversiblen mehrfach ablaufenden zyklischen Prozess behält der Energiespeicher seine ausreichende Festigkeit im energetisch beladenen und entladenen Zustand bei.

Stoffgemisch, sowie daraus hergestellte Bauteile sind dann als chemischer oder thermochemischer Energiespeicher verwendbar.

Durch Zugaben von Anmachwasser oder Zugabewasser zum hier beschriebenen Stoffgemisch wird das Stoffgemisch verarbeitbar und kann zur Herstellung von Bauteilen unterschiedlicher Formen verwendet werden. Der Abbindeprozess setzt ein, wobei Wassermoleküle chemisch gebunden und als Kristallwasser im Stoffgemisch eingelagert werden. Die Bauteile sind nach dem Erhärten mechanisch belastbar und können als lasttragende Bauteile verwendet werden. Zur Herstellung derartiger Bauteile können übliche Vorrichtungen und Verfahren der Betonverarbeitung eingesetzt werden und aus der Betontechnologie bekannte Komponenten verwendet werden.

Die verwendete Zementkomponente enthält mindestens eine Aluminatkomponente und mindestens eine Sulfatkomponente, sowie mindestens eine Calciumkomponente. Die Zementkomponente wird vorzugsweise auf Calciumsulfoaluminat-Klinker und einer Sulfatquelle basieren.

Zur Erreichung der wärmespeichernden bzw. energiespeichernden Eigenschaften des erhärteten Stoffgemisches umfasst die Zementkomponente vorzugsweise Calciumsulfoaluminat-Klinker und eine Sulfatkomponente beispielsweise aus Gips (Dihydrat) und/oder Halbhydrat (oder Bassanit) und/oder Anhydrit.

Die hier beschriebene Zementkomponente liegt ausserhalb der europäischen Zementnorm EN 197-1:2010 und basiert vorzugsweise auf Calciumsulfoaluminatzement.

Die Aluminatkomponente kann alternativ hauptsächlich aus Portlandzement mit einem hohen Tricalciumaluminatgehalt (> 12 Gew.-%), Calciumaluminatzement (Tonerdezement), Metakaolin und/oder reaktiven Aluminiumoxyden oder -hydroxyden bestehen. Diese Materialien können mit Komponenten, welche Calciumsulfat enthalten und/oder Calciumquellen wie Portlandzement, Schlacken, Flugaschen, Kalkstein und/oder anderen mineralischen Pulvern kombiniert werden.

Die entscheidenden Komponenten zur Erreichung eines geeigneten Stoffgemisches, welches nach dem Erhärtungsprozess einen gewünschten Energiespeicher bilden kann, sind die Sulfatkomponente und die Aluminatkomponente, welche in einer Mindestkonzentration vorliegen müssen, damit die energiespeichernde Wirkung ausreichend ausbildbar ist. Bei der Erhärtung des Stoffgemisches bildet sich ein hoher Anteil des Minerals Ettringit (Ca₆Al₂(SO₄)₃(OH)₁₂·26H₂O), welches zur Gruppe der wasserhaltigen Sulfate mit fremden Anionen gehört. Ettringit zeichnet sich durch einen hohen Gehalt an Kristallwasser aus, welches durch Dehydratation aus dem Ettringit entweicht. Versuche haben gezeigt, dass nach dem Erstarren eines Stoffgemisches wie oben beschrieben, bei Wahl geeigneter Komponenten in vorteilhaften Mischungsverhältnissen, ein ausgehärtetes Stoffgemisch herstellbar ist, aus welchem Bauteile erzeugt werden können, in welchen durch Dehydratation Energie speicherbar ist, die aber trotzdem dauerhaft hohen Druckbelastungen stand halten.

Das Ziel ist es ein Stoffgemisch in Form einer Zementkomponente zu schaffen, welches in seiner Oxidzusammensetzung einen Gehalt von mindestens 8 Gew.-% Schwefeltrioxid (SO₃) und mindestens 16 Gew.-% Aluminiumoxid (Al₂O₃) aufweist.
Dies trifft z. B. für eine Mischung aus 75 Gew.-% Calciumsulfoaluminat-Klinker und 25 Gew.-% Gips (34 Gew.-% Al₂O₃, 18 Gew.-% SO₃) oder für eine Mischung aus 40% Calciumsulfoaluminatzement, 40 Gew.-% Portlandzement CEM I 42.5 N und 20 Gew.-% Gips (20 Gew.-% Al₂O₃, 14 Gew.-% SO₃) zu.
Wie in der Betontechnologie üblich, werden neben der Zementkomponente je nach Anforderungsprofil der zu erstellenden Bauteile gegebenenfalls Gesteinskörnung, umfassend Sand und/oder Kies zur Herstellung von Mörtel oder Beton zugegeben.

Desweiteren können gegebenenfalls Zusatzstoffe, beispielsweise Kalksteinmehl, Flugasche, Tuff, Trass und/oder Hüttensand dem Stoffgemisch bei der Herstellung in geringen Mengen zugeführt werden. Diese Zusatzstoffe dienen zur Verbesserung der Festigkeit und der Beständigkeit des ausgehärteten Stoffgemisches bzw. der Bauteile aus diesem Stoffgemisch.

Ausserdem können dem Stoffgemisch bei der Herstellung auch Zusatzmittel zur Erreichung gewünschter physikalischer und/oder chemischer Eigenschaften, beispielsweise Fliessmittel, Erstarrungsregler, Luftporenbildner und/oder Verdicker in geringen Mengen zugesetzt. Diese Mengen liegen etwa im Bereich kleiner als 5 Gew.-% in Relation zur Masse der Zementkomponente.

Um gewünschte Energiespeichereigenschaften mit ausreichenden Energiespeicherdichten und mechanischer Stabilität zu erhalten muss der resultierende Ettringitgehalt zwischen 40 Gew.-% bis 90 Gew.-% der Masse des erhärteten Stoffgemisches liegen. Neben dem Ettringitanteil bilden sich im erhärteten Stoffgemisch Anteile Calciumsilicathydrate, Calciumaluminathydrate, Calciumhydroxid, Aluminiumhydroxid, Strätlingit, AFm-Phasen (z. B. Monosulfat, Monocarbonat, Hemicarbonat), Thaumasit, Magnesiumhydroxid und/oder Hydrotalcit aus.

Das erhärtete Stoffgemisch wird durch Einwirkung von thermischer Energie und einer resultierenden Temperaturerhöhung auf Temperaturen von 50°C oder höher entwässert, wobei Kristallwassermoleküle aus dem erhärteten Stoffgemisch entweichen. Aus dem Ettringit bildet sich Meta-Ettringit, welcher weniger Kristallwassermoleküle aufweist und eine veränderte Kristallstruktur im Vergleich zum Ettringit aufweist. Trotz der chemischen Veränderung des Ettringitanteils bleibt aber die Festigkeit des erhärteten Stoffgemisches erhalten, sodass das erhärtete Stoffgemisch zur Herstellung von lasttragenden Bauteilen einsetzbar ist.

Vorteilhaft ist eine Temperaturerhöhung auf mindestens annähernd 60°C, insbesondere auf zwischen 80°C und 120°C zur Erreichung einer Abspaltung von Kristallwasser und damit einer ausreichenden Dehydratation, wobei der Erhalt der Festigkeit gewährleistet ist. Da Ettringit eine hohe Dehydratationsenthalpie von 850 kJ/mol aufweist, ist entsprechend viel Energie in einem Energiespeicher, bestehend aus dem erhärteten Stoffgemisch speicherbar und durch eine zeitversetzte Befeuchtung des erhärteten Stoffgemisches bzw. der daraus hergestellten Bauteile wieder freisetzbar.

Während das erhärtete Stoffgemisch oder der Energiespeicher einen Entwässerungsprozess und die folglich auftretende Dehydratation des Stoffgemisches durchläuft, findet eine Beladung des Energiespeichers mit Energie statt, wobei das Stoffgemisch nach erfolgter Entwässerung wieder auf Raum- bzw. Umgebungstemperatur abkühlt. Der Energiespeicher wird damit nur während des Entwässerungsprozesses auf eine erhöhte Temperatur für einen gewissen Zeitraum aufgeheizt. Der derart beladene Energiespeicher muss lediglich vor dem Kontakt mit Wasser oder wassermolekülhaltigen Flüssigkeiten geschützt werden, damit keine Entladung stattfindet.

Da bei einer zeitversetzten Befeuchtung des Energiespeichers eine reversible Hydratation des Ettringitanteils und damit die Anlagerung von Wassermolekülen in Form von Kristallwasser stattfindet, wobei eine exotherme Reaktion stattfindet und der Energiespeicher aufgeheizt wird, ist Wärmeenergie gezielt entnehmbar. Durch kontrollierte Befeuchtung mit Wasser, Wassermolekülhaltigen Flüssigkeiten oder Wasserdampf kann die Menge der zu entnehmenden Wärmeenergie durch die reversible Bildung von Ettringit aus Metaettringit beeinflusst werden.

Durch die reversible Durchführung einer Dehydratation des erhärteten Stoffgemisches durch Energieeinsatz mittels Erwärmung und eine zeitversetzte Hydratation mittels Befeuchtung und Entnahme der auftretenden Hydratationsenergie kann die im dehydratatisierten erhärteten Stoffgemisch gespeicherte chemische Energie in Form von Hydratationsenergie oder Reaktionsenergie gezielt nutzbar gemacht werden, was in dem hier beschriebenen Verfahren erläutert wird, womit ein multifunktionaler Energiespeicher erreichbar ist.

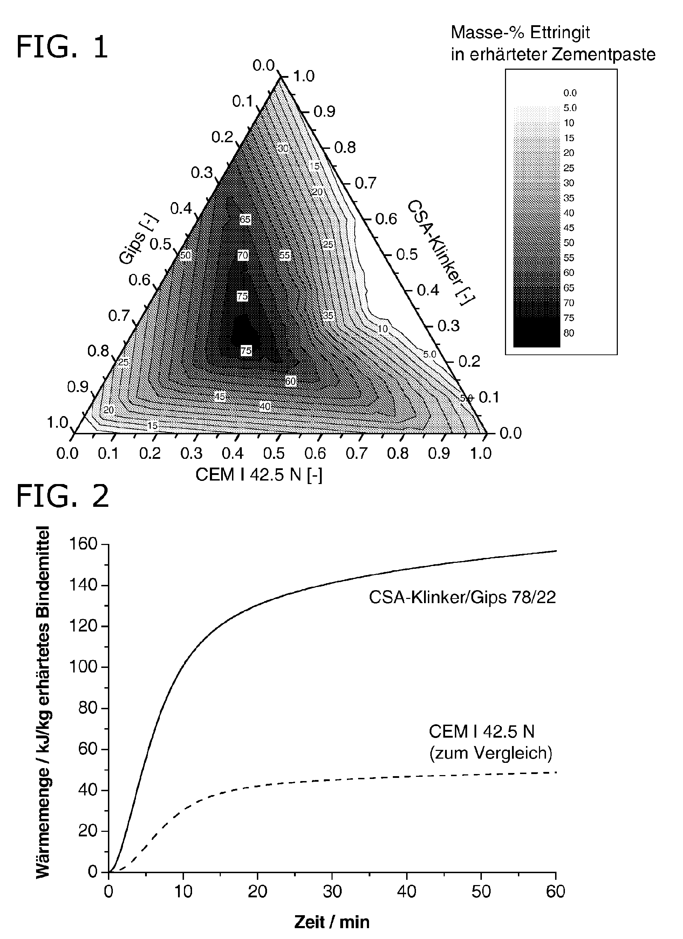

In Versuchen konnten erhärtete Stoffgemische unter Verwendung von Calciumsulfoaluminat (CSA) unter Beimengung von Gips mit oder ohne Portlandzement (Ordinary Portland cement (OPC)) mit Ettringitgehalt deutlich oberhalb von 40 Gew.-% erhalten werden. Die Figur 1 beschreibt den erreichbaren Ettringitgehalt in unterschiedlichen Bindemittelgemischen aus CSA-Klinker, Portlandzement (CEM I 42.5 N) und Gips.

Ein Stoffgemisch, umfassend 75 Gew.-% CSA und 25 Gew.-% Gips führte zu einem Ettringitgehalt von 64 Gew.-% im erhärteten Stoffgemisch, während ein Stoffgemisch aus 40 Gew.-% CSA, 40 Gew.-% Gips und 20 Gew.-% OPC zu einem Ettringitgehalt im erhärtete Stoffgemisch von 75 Gew.-% geführt hat. Ähnlich hohe Ettringitgehalte sind auch in Stoffgemischen umfassend andere oben aufgelistete Zementkomponenten erreichbar.

Figur 1 zeigt deutlich, dass die erforderlichen hohen Ettringitgehalte in erhärtetem Beton auf OPC-Basis nicht erreichbar sind.

Ein Stoffgemisch, umfassend 78 Gew.-% CSA Klinker und 22 Gew.-% Gips, welches mit Zugabewasser bei einem Wasser/Feststoff-Wert von 0.72 angemischt wurde, führte zu einem Ettringitgehalt von etwa 60 Gew.-% im erhärteten Stoffgemisch. In einem Trocknungsofen wurde eine Probe des erhärteten Stoffgemisches bei einer Temperatur von 110 °C bis zur Gewichtskonstanz entwässert und damit mit Energie beladen.

Zeitversetzt wurde eine Befeuchtung durch Wasserzugabe durchgeführt und die zeitliche Abgabe von thermischer Energie in einem Wärmeflusskalorimeter aufgenommen und wie in Figur 2 dargestellt auf ein kg des erhärteten Stoffgemisches umgerechnet.

Eine Vergleichmessung mit einem Stoffgemisch umfassend OPC mit einem Ettringitgehalt von etwa 13 Gew.-% unter Verwendung des gleichen Versuchsaufbaus führt zu den ebenfalls auf ein kg CEM I 42.5 N umgerechneten Vergleichswerten. Die durch das erhärtete Stoffgemisch mit hohem Ettringitgehalt erreichbare Energiefreisetzung mit der Zeit verdeutlicht die Vorzüge des hier vorgestellten Materials für Energiespeicher, welche als chemische Energiespeicher bezeichnet werden.

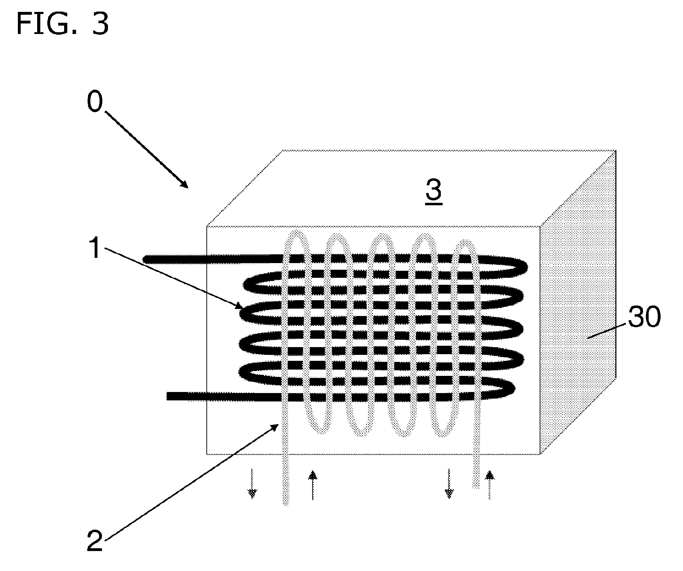

In der kommerziellen Verwendung des erhärtete Stoffgemisches würde man Bauteile 3 aus dem erhärteten Stoffgemisch herstellen, welche mit einem Energiebeladungs-/Energieentladungssystem 1 und mit einem Entfeuchtungs-/Befeuchtungssystem 2 verbunden sind, was beispielhaft in Figur 3 gezeigt wird. Das Energiebeladungs-/Energieentladungssystem 1 führt zur Dehydratation durch Wärmeeinwirkung und nimmt die bei der späteren Hydratation freiwerdende Energie auf und macht diese nutzbar. Mittels Entfeuchtungs-/Befeuchtungssystems 2 kann das erhärtete Stoffgemisch bzw. die daraus hergestellten Bauteile vereinfacht entfeuchtet und zeitversetzt gezielt und kontrolliert mit wassermolekülhaltigen Flüssigkeiten, insbesondere mit reinem Wasser zeitgesteuert befeuchtet werden. Das mit Energiebeladungs-/Energieentladungssystem 1 und Entfeuchtungs-/Befeuchtungssystem 2 verbundene Bauteil 3 dient dann insgesamt als Energiespeicher 0.

Als Energiebeladungs-/Energieentladungssystem 1 kann mindestens ein Rohrleitungssystem eingesetzt werden, welches das Bauteil 3 aus erhärtetem Stoffgemisch mindestens teilweise durchsetzt, wobei ein Übertragungsmedium in Form eines Fluids durch das mindestens eine Rohrleitungssystem des Energiebeladungs-/Energieentladungssystems 1 geführt wird. Bei der Beladung ist das Übertragungsmedium auf eine Temperatur T₁ > 50°C aufgeheizt und strömt durch das Energiebeladungs-/Energieentladungssystem 1, welches als Wärmetauscher fungiert und somit das Bauteil 3 aufheizt.

Das Entfeuchtungs-/Befeuchtungssystems 2 ist beispielweise aus einem perforierten Röhrensystem gebildet, welches das Bauteil 3 mindestens teilweise quert und das bei der Dehydratation austretende Wasser bzw. den austretenden Wasserdampf auffängt. Nach der Dehydratation ist das Bauteil 3 mit Energie beladen und die Zuführung und Zirkulation des Übertragungsmediums kann eingestellt werden.

Das während der Dehydratation im Entfeuchtungs-/Befeuchtungssystem 2 gesammelte Wasser kann aufgefangen werden und dem Entfeuchtungs-/Befeuchtungssystems 2 zur Wiederverwendung zu einem späteren Zeitpunkt zugeführt werden.

Wenn Energie aus dem Bauteil 3 entnommen werden soll, wird ein Befeuchtungsmedium, welches Wassermoleküle aufweist, dem Bauteil 3 mittels Entfeuchtungs-/Befeuchtungssystem 2 kontrolliert zugeführt.

Das Befeuchtungsmedium liegt üblicherweise in Form von Wasserdampf oder einer wasserhaltigen Flüssigkeit vor und durchsetzt das Bauteil 3 mindestens teilweise. Durch die oben beschriebene Hydratation heizt sich das Stoffgemisch und damit das Bauteil 3 auf. Die auftretende Wärme wird auf das Übertragungsmedium innerhalb des Energiebeladungs-/Energieentladungssystems 1 übertragen, wobei das Übertragungsmedium entsprechend auf eine Temperatur T₂ aufgeheizt wird.

In speziellen Ausführungsformen kann das Entfeuchtungs-/Befeuchtungssystem 2 in das Energiebeladungs-/Energieentladungssystem 1 integriert sein, wodurch entsprechend weniger Rohrleitungssysteme innerhalb des Energiespeichers 0 verlegt sein müssen.

Möglich ist aber auch die Herstellung von Energiespeichern 0 aus erhärtetem Stoffgemisch, welche tunnelartige oder anders geformte Ausnehmungen bilden, durch welche das Übertragungsmedium und/oder das Befeuchtungsmedium direkt führbar ist, sodass auf die Ausgestaltung von Rohrsystemen verzichtet werden kann.

Um möglichst keine freigesetzte thermische Energie zu verlieren und beim Beladungsvorgang wenig hineingesteckte Wärmeenergie zu verlieren, kann das erhärtete Stoffgemisch bzw. die Bauteile 3 mit einer Isolationshülle 30 teilweise umgeben sein, welche thermische Verluste minimiert. Auch um ein ungewolltes Eindringen von Wasser in die Bauteile 3 zu verhindern und damit eine Langzeitspeicherung der Energie zu ermöglichen, kann die Isolationshülle 30 dienen, welche das Bauteil 3 hygrisch isoliert.

Neben einer Lagerung der Bauteile 3 in trockenem Klima, können Isolationshüllen 30 in Form von Barrierebeschichtungen wie impermeable Membranen oder wasserdampfdichte Isolierschichten auf den Oberflächen der Bauteile 3 vorgesehen sein. Das erhärtete Stoffgemisch bzw. der Energiespeicher 0 kann aber auch in einem Gefäss gelagert sein, dessen Innenraum einfach befeuchtet und aufgeheizt werden kann.

Das bei der Beladung mittels Dehydratation freigesetzte Wasser kann über Vorrichtungen in Tanks abgeleitet werden und dort für die spätere Befeuchtung und damit Entladung des Energiespeichers 0 mehrmals wiederverwendet werden.

Um das erhärtete Stoffgemisch und daraus hergestellte Bauteile 3 noch zu verstärken, kann das Stoffgemisch zusätzlich mit einer Bewehrung, aus Metall oder Kunststoffen versehen werden. Neben Textilien können auch unterschiedliche Fasern eingesetzt werden.

Aufgrund der Reversibilität des Dehydratations-/Hydratationsvorganges wobei die reversible Ein- und Auslagerung von Kristallwassermolekülen auftritt, ist ein hier vorgestellter Energiespeicher 0 wartungsfrei für viele Zyklen einsetzbar.

Mit Hilfe des vorgestellten Energiespeichers kann Wärmeenergie, insbesondere in Solarthermiekraftwerken gewonnene Wärmeenergie, zur Dehydratation genutzt werden und damit in Form von chemischer Energie im erhärteten Stoffgemisch über einen langen Zeitraum gespeichert werden. Erfindungsgemäss kann das erhärtete Stoffgemisch Bauteile von Bauwerken bilden, sodass neben einer energiespeichernden Funktion auch eine tragende Funktion erreicht wird.

### Bezugszeichenliste

- 0: Energiespeicher
- 1: Energiebeladungs-/Energieentladungssystem
- 2: Entfeuchtungs-/Befeuchtungssystem
- 3: Bauteil
- 30: Isolationshülle

## Patentansprüche

1. Lasttragender und strukturstabiler Energiespeicher (0), umfassend ein Bauteil (3) aus einem erhärteten Stoffgemisch, wobei ein Energiebeladungs-/Energieentladungssystem (1) das erhärtete Stoffgemisch mindestens teilweise quert,
**dadurch gekennzeichnet, dass**
das erhärtete Stoffgemisch einen Ettringitanteil von 40 Gew.-% bis 90 Gew.-% aufweist, welcher bei der Bildung des erhärteten Stoffgemisches entstanden ist, sodass
ein Energiebeladevorgang durch Dehydratation des erhärteten Stoffgemisches
und
ein zeitversetzter Energieentladevorgang durch Befeuchtung des erhärteten Stoffgemisches, mittels eines das erhärtete Stoffgemisch mindestens teilweise querendes Entfeuchtungs-/Befeuchtungssystem (2)
reversibel mehrfach durchführbar ist,
wobei die auftretende Reaktionsenergie bei unveränderter Druckfestigkeit des erhärteten Stoffgemisches auf das Energiebeladungs-/Energieentladungssystem (1) übertragbar ist.

2. Energiespeicher (0) gemäss Anspruch 1, **dadurch**
**gekennzeichnet, dass**
das erhärtete Stoffgemisch durch Hydratation eines Stoffgemisches in Form einer Zementkomponente mit einer Oxidzusammensetzung, umfassend einen Gehalt von mindestens 8 Gew.-% Schwefeltrioxid (SO₃) und mindestens 16 Gew.-% Aluminiumoxid (Al₂O₃) hergestellt worden ist.

3. Energiespeicher (0) gemäss Anspruch 1,
**dadurch gekennzeichnet, dass**
das erhärtete Stoffgemisch ein lasttragendes und strukturstabiles Bauteil (3) unterschiedlicher Form bildet.

4. Energiespeicher (0) gemäss Anspruch 3,
**dadurch gekennzeichnet, dass**
das Bauteil (3) mindestens teilweise von einer thermischen und/oder hygrischen Isolationshülle (30) umgeben ist.

5. Energiespeicher (0) gemäss Anspruch 1, **dadurch**
**gekennzeichnet, dass**
das Energiebeladungs-/Energieentladungssystem (1) in Form eines Rohrleitungssystems vorliegt, welches von einem Übertragungsmedium durchströmt wird.

6. Verwendung eines Stoffgemisches zur Herstellung eines Energiespeichers in Form von lasttragenden und strukturstabilen Bauteilen (3),
**dadurch gekennzeichnet, dass**
das Stoffgemisch mindestens eine Zementkomponente mit einer Oxidzusammensetzung umfassend einen Gehalt von mindestens 8 Gew.-% Schwefeltrioxid (SO₃) und mindestens 16 Gew.-% Aluminiumoxid (Al₂O₃) umfasst, woraus ein erhärtetes Stoffgemisch durch Hydratisierung ausbildbar ist, wobei das erhärtete Stoffgemisch einen Ettringitanteil von 40 Gew.-% bis 90 Gew.-% aufweist, aufgrund seiner dauerhaften Festigkeit zur Bildung des Energiespeichers als lasttragendes Bauteil (3) dient, wobei ein Energiebeladungs-/Energieentladungssystem (1) sowie ein Entfeuchtungs-/Befeuchtungssystem (2) vom erhärteten Stoffgemisch mindestens teilweise umgeben angeordnet ist und chemische Energiespeichereigenschaften durch zyklische reversible Dehydratation und Hydratation durch Entnahme und Einlagerung von Kristallwasser zeigt.

7. Verwendung gemäss Anspruch 6,
**dadurch gekennzeichnet, dass**
das Stoffgemisch einen Anteil Calciumsulfoaluminatzement und eine Sulfatkomponente, beispielsweise aus Gips (Dihydrat) und/oder Halbhydrat (oder Bassanit) und/oder Anhydrit umfasst.

8. Verwendung gemäss einem der Ansprüche 6 bis 7, **dadurch**
**gekennzeichnet, dass**
das Stoffgemisch einen Zusatzstoff, umfassend Kalksteinmehl und/oder Flugasche und/oder Hüttensand und/oder Portlandzement und/oder Calciumhydroxid oder -oxid und/oder Aluminiumhydroxid- oder oxid und/oder Aluminiumsulfat und/oder andere Füllstoffe umfasst.

9. Verwendung gemäss einem der Ansprüche 6 bis 8, **dadurch**
**gekennzeichnet, dass**
das Stoffgemisch ein Zusatzmittel in Form eines Fliessmittels und/oder eines Erstarrungsreglers und/oder eines Verdickers umfasst.

10. Verfahren zur Herstellung eines lasttragenden und strukturstabilen Energiespeichers (0), umfassend ein Bauteil (3) aus einem erhärteten Stoffgemisch, wobei ein Energiebeladungs-/Energieentladungssystem (1) und ein Entfeuchtungs-/Befeuchtungssystem (2) das erhärtete Stoffgemisch mindestens teilweise quert,
**gekennzeichnet durch**
Mischung eines Stoffgemisches mit einer Zementkomponente, welche in seiner Oxidzusammensetzung einen Gehalt von mindestens 8 Gew.-% Schwefeltrioxid (SO3) und mindestens 16 Gew.-% Aluminiumoxid (Al2O3) aufweist
und anschliessende Hydratation des Stoffgemisches,
wobei sich beim Erhärten des Stoffgemisches das lasttragende und strukturstabile Bauteil (3) ausbildet und
ein Ettringitanteil von 40 Gew.-% bis 90 Gew.-% in der Masse des resultierenden erhärteten Stoffgemisches entsteht, sodass der Energiespeicher (0) danach zur Energiespeicherung mittels reversibler Dehydratation/Hydratation einsetzbar ist.

11. Verfahren gemäss Anspruch 10, wobei die Zementkomponete aus einer Mischung aus 75 Gew.-% Calciumsulfoaluminat-Klinker und 25 Gew.-% Gips (34 Gew.-% Al2O3, 18 Gew.-% SO3) gebildet ist.

12. Verfahren gemäss Anspruch 10, wobei die Zementkomponente aus einer Mischung aus 40% Calciumsulfoaluminatzement, 40 Gew.-% Portlandzement CEM I 42.5 N und 20 Gew.-% Gips (20 Gew.-% Al2O3, 14 Gew.-% SO3) gebildet ist.

## Claims

1. A load-bearing and structurally stable energy store (0) comprising a component (3) that consists of a hardened composition, wherein an energy charging/energy discharging system (1) at least partially traverses the hardened composition,
**characterized in that**
the hardened composition has an ettringite content of 40 wt.% to 90 wt.%, which was created during the formation of the hardened composition, such that
an energy charging process by dehydrating the hardened composition
and
a time-delayed energy discharging process by hydrating the hardened composition with the aid of a dehydration/hydration system (2), which at least partially traverses the hardened composition,
can be reversibly carried out multiple times,
wherein the occurring reaction energy can be transferred to the energy charging/energy discharging system (1) without changing the compressive strength of the hardened composition.

2. The energy store (0) according to claim 1,
**characterized in that**
the hardened composition was formed by hydrating a composition in the form of a cement component with an oxide compound comprising a sulfur trioxide (SO₃) content of at least 8 wt.% and an aluminum oxide (Al₂O₃) content of at least 16 wt.%.

3. The energy store (0) according to claim 1,
**characterized in that**
the hardened composition forms a load-bearing and structurally stable component (3) of different shapes.

4. The energy store (0) according to claim 3,
**characterized in that**
the component (3) is at least partially surrounded by a thermal and/or hygric insulation cover (30).

5. The energy store (0) according to claim 1,
**characterized in that**
the energy charging/energy discharging system (1) is realized in the form of a pipeline system, through which a transfer medium flows.

6. A utilization of a composition for producing an energy store in the form of load-bearing and structurally stable component (3),
**characterized in that**
the composition comprises at least one cement component with an oxide compound comprising a sulfur trioxide (SO₃) content of at least 8 wt.% and an aluminum oxide (Al₂O₃) content of at least 16 wt.%, of which a hardened composition can be produced by means of hydration, wherein the hardened composition has an ettringite content of 40 wt.% to 90 wt.% and serves for producing the energy store in the form of a load-bearing component (3) due to its fatigue strength, and wherein an energy charging/energy discharging system (1), as well as a dehydration/hydration system (2), is at least partially surrounded by the hardened composition and has chemical energy store properties due to cyclic reversible dehydration and hydration, which is achieved by removing and dispersing water of crystallization.

7. The utilization according to claim 6,
**characterized in that**
the composition comprises a proportion of calcium sulfoaluminate cement and a sulfate component, for example, of gypsum (dihydrate) and/or hemihydrate (or bassanite) and/or anhydrite.

8. The utilization according to one of claims 6-7,
**characterized in that**
the composition comprises an additive comprising powdered limestone and/or fly ash and/or slag sand and/or Portland cement and/or calcium hydroxide or calcium oxide and/or aluminum hydroxide or aluminum oxide and/or aluminum sulfate and/or other fillers.

9. The utilization according to one of claims 6-8,
**characterized in that**
the composition comprises an additive in the form of a superplasticizer and/or a setting regulator and/or a thickener.

10. A method for producing a load-bearing and structurally stable energy store (0) comprising a component (3) of a hardened composition, wherein an energy charging/energy discharging system (1), as well as a dehydration/hydration system (2), at least partially traverses the hardened composition,
**characterized by**
mixing a composition with a cement component, which with respect to its oxide compound has a sulfur trioxide (SO₃) content of at least 8 wt.% and an aluminum oxide (Al₂O₃) content of at least 16 wt.%, and
subsequent hydration of the composition,
wherein the load-bearing and structurally stable component (3) is formed as the composition hardens and an ettringite content of 40 wt.% to 90 wt.% is created in the mass of the resulting hardened composition such that the energy store (0) can subsequently be used for storing energy by means of reversible dehydration/hydration.

11. The method according to claim 10, wherein the cement component is composed of a mixture of 75 wt.% calcium sulfoaluminate clinker and 25 wt.% gypsum (34 wt.% Al₂O₃, 18 wt.% SO₃).

12. The method according to claim 10, wherein the cement component is composed of a mixture of 40% calcium sulfoaluminate cement, 40 wt.% Portland cement CEM I 42.5 N and 20 wt.% gypsum (20 wt.% Al₂O₃, 14 wt.% SO₃).

## Revendications

1. Accumulateur d'énergie (0) porteur de charge et structurellement stable, comprenant une pièce (3) constituée d'un mélange de substances durci, le mélange de substances durci étant au moins partiellement traversé par un système de charge d'énergie/décharge d'énergie (1),
**caractérisé en ce que**
le mélange de substances durci comprend une part d'ettringite variant de 40% en poids à 90% en poids, laquelle est apparue pendant la formation du mélange de substances durci, de manière à pouvoir effectuer une opération de charge d'énergie par déshydratation du mélange de substances durci, et une opération de décharge d'énergie de façon décalée dans le temps par humidification du mélange de substances durci, au moyen d'un système de déshydratation/humidification (2) traversant au moins partiellement le mélange de substances durci, de façon répétée et réversible,
dans lequel l'énergie de réaction générée peut être transmise au système de charge d'énergie/décharge d'énergie (1), la résistance à la pression du mélange de substances durci restant inchangée.

2. Accumulateur d'énergie (0) selon la revendication 1,
**caractérisé en ce que**
le mélange de substances durci a été préparé par hydratation d'un mélange de substances sous la forme d'un composant de ciment avec une composition à base d'oxydes présentant une teneur en trioxyde de soufre (SO₃) d'au moins 8% en poids et une teneur en alumine (Al₂O₃) d'au moins 16% en poids.

3. Accumulateur d'énergie (0) selon la revendication 1,
**caractérisé en ce que**
le mélange de substances durci forme une pièce (3) porteuse de charge et structurellement stable de forme variable.

4. Accumulateur d'énergie (0) selon la revendication 3,
**caractérisé en ce que**
la pièce (3) est au moins partiellement entourée par une gaine isolante (30) thermique et/ou hydrique.

5. Accumulateur d'énergie (0) selon la revendication 1,
**caractérisé en ce que**
le système de charge d'énergie/décharge d'énergie (1) se présente sous la forme d'un système de conduits traversé par un fluide de transmission.

6. Utilisation d'un mélange de substances pour la réalisation d'un accumulateur d'énergie sous la forme de pièces porteuses de charge et structurellement stables (3),
**caractérisée en ce que**
le mélange de substances comprend un composant de ciment avec une composition à base d'oxydes présentant une teneur en trioxyde de soufre (SO₃) d'au moins 8% en poids et une teneur en alumine (Al₂O₃) d'au moins 16% en poids, permettant ainsi de produire un mélange de substances durci par hydratation, le mélange de substances durci présentant une teneur en ettringite variant de 40% en poids à 90% en poids, servant à la formation de l'accumulateur d'énergie en tant que pièce porteuse de charge (3) en raison de sa résistance durable, un système de charge d'énergie/décharge d'énergie (1) et un système de déshydratation/humidification (2) étant agencés de manière à être au moins partiellement entourés par le mélange de substances durci, tout en offrant des propriétés chimiques d'accumulateur d'énergie par déshydratation et hydratation réversibles cycliques par évacuation et alimentation d'eau de cristallisation.

7. Utilisation selon la revendication 6,
**caractérisée en ce que**
le mélange de substances comprend une part de ciment de sulfoaluminate de calcium et un composant de sulfate, par exemple à base de plâtre (di-hydrate) et/ou de semi-hydrate (ou de Bassinat) et/ou d'anhydrite.

8. Utilisation selon l'une des revendications 6 à 7,
**caractérisée en ce que**
le mélange de substances comprend un adjuvant comprenant de la poudre de calcaire et/ou des cendres volantes et/ou du sable laitier et/ou du ciment de Portland et/ou de l'hydroxyde ou de l'oxyde de calcium et/ou de l'hydroxyde ou de l'oxyde d'aluminium et/ou du sulfate d'aluminium et/ou d'autres agents de charge.

9. Utilisation selon l'une des revendications 6 à 8,
**caractérisée en ce que**
le mélange de substances comprend un adjuvant sous la forme d'un fluidifiant et/ou d'un régulateur de prise et/ou d'un épaississant.

10. Procédé de réalisation d'un accumulateur d'énergie (0) porteur de charge et structurellement stable, comprenant une pièce (3) constituée d'un mélange de substances durci, le mélange de substances durci étant au moins partiellement traversé par un système de charge d'énergie/décharge d'énergie (1) et par un système de déshydratation/humidification (2),
**caractérisé par**
le mélange d'un mélange de substances avec un composant de ciment présentant une composition d'oxydes avec une teneur en trioxyde de soufre (SO₃) d'au moins 8% en poids et une teneur en alumine (Al₂O₃) d'au moins 16% en poids, suivi de l'hydratation du mélange de substances, le durcissement du mélange de substances formant ainsi la pièce porteuse de charge et structurellement stable (3), et la masse résultante du mélange de substances durci présentant une part d'ettringite variant de 40% en poids à 90% en poids, de sorte que l'accumulateur d'énergie (0) peut ensuite être utilisé pour l'accumulation d'énergie au moyen d'une déshydratation/hydratation réversible.

11. Procédé selon la revendication 10, dans lequel le composant de ciment est constitué d'un mélange de 75% en poids de clinker sulfoalumineux et de 25% en poids de plâtre (34% en poids d'Al₂0₃, 18% en poids de SO₃).

12. Procédé selon la revendication 10, dans lequel le composant de ciment est constitué d'un mélange de 40% de ciment de sulfoaluminate de calcium, de 40% en poids de ciment de Portland CEM I 42.5 N, et de 20% en poids de plâtre (20% en poids d'Al₂0₃, 14% en poids de SO₃).
